# EUROPEAN PATENT SPECIFICATION

(11) **EP 4 287 033 B1**
(45) Date of publication and mention of the grant of the patent: **03.09.2025**
(21) Application number: 21921848.4
(22) Date of filing: 29.01.2021
(51) Int. Cl.: G06F 13/38, H01R 27/00, H01R 13/502

(54) **EXPANSION DOCK**
EXPANSIONSDOCK
STATION D'ACCUEIL D'EXPANSION

(43) Date of publication of application: 06.12.2023
(73) Proprietor: Fullink Technology Co., Ltd., Shenzhen, Guangdong 518104 (CN)
(72) Inventor: XIAO, Jie, Shenzhen, Guangdong 518104 (CN); LIN, Juan, Shenzhen, Guangdong 518104 (CN)
(74) Representative: Lewis Silkin LLP
(86) International application number: PCT/CN2021/074389
(87) International publication number: WO 2022/160243

(56) References cited:
- CN-U- 206 135 029
- CN-U- 206 135 029
- CN-U- 206 727 384
- CN-U- 207 909 110
- CN-U- 207 909 110
- CN-U- 212 341 775
- US-B1- 7 131 852

## Description

### TECHNICAL FIELD

The present application relates to the technical field of docking stations, and more particularly to a docking station.

### BACKGROUND

The docking station is generally electrically connected to an electronic product such as a notebook, a tablet, etc. through a male connector to expand interfaces. However, the male connector of the existing docking station is generally inconvenient to be accommodated and easy to be damaged.

A patent application CN201621020779 disclosed a USB connects flexible protection architecture, including the casing that encloses into the slide, be equipped with on the casing along the microscler through -hole of slide extending direction setting, the setting is the elasticity slider of cavity form in the slide, be equipped with USB in the cavity department of first end and connect, is equipped with the FPC circuit board of connecting rather than the electricity in the cavity department of second end, is equipped with the button that inserts in the microscler through -hole on the lateral wall of elasticity slider, and the button is close to cavity second end setting, be equipped with limit structure between the inside wall of elasticity slider and casing, including setting up the spacing groove on setting up the inside wall at the casing in arch that elasticity slider second was served, along slide extending direction interval, spacing groove and microscler through -hole are located the homonymy of casing, it is equipped with the end cover to connect the port department that corresponds at the slide with USB. Can connect USB to stretch out to connect USB when using during the use and retract, can effectually connect USB and protect, solve USB and connected the easy problem of damaging. CN206135029U relates to a USB connector telescopic protection structure, comprising a shell body formed with a through hole, and a connector port provided with an end cover, where an inner side wall of shell body is formed with a limiting groove.

A patent application US7131852B1 disclosed that a retractable plug of power supply is comprised of a slide seat and a plug body. The slide seat is snap-fastened in a housing and metal pieces are arranged on sides of the plug body. An elastic lamella is disposed above the plug body, and a wedge block is located on the elastic lamella. The housing has a slot and a positioning hook part is provided on an inner wall face of the housing. A pushbutton is combined to the elastic lamella through the slot. The plug body is slidable in the slide seat by pushing the pushbutton in order to stretch metal pieces out of the housing. The metal pieces are prevented from being withdrawn into the housing by way of mutual retaining of the wedge and the positioning hook part, and such retaining could be released by pressing down the pushbutton to allow the withdrawal of the metal pieces into the housing.

A patent application CN201820293052 disclosed that an electronic equipment technical field provides a converter with retractable interface, including casing, printed circuit board, first interface and output interface, first interface and output interface link to each other with the printed circuit board electrical property respectively, and this converter still including the backup pad that is used for supportingprinted circuit board, slides and locates the connecting plate in the backup pad, locates second interface and button on the connecting plate, and the second interface links to each other with the printed circuit board electrical property. Compared with the prior art, the utility model discloses a first interface and second interface is set up, the data transmission efficiency between the mobileterminal can be improved, the slip of second interface accessible connecting plate in the backup pad realizes stretching out the casing and contracts the function to the casing in, therefore the structural design of this converter is ingenious, conveniently carries, the second interface not only has data transmission's function, but also has the function of charging, therefore the function of multiplicable converter, and then makes mobile terminal's function diversified.

### TECHNICAL PROBLEM

One of the objects of embodiments of the present application is to provide a docking station, in order to solve the problem that the male connector of the existing docking station is inconvenient to be accommodated and easy to be damaged.

### SUMMARY

In order to solve above technical problem, the technical solution adopted in the embodiment of the present application is as followed:

In an embodiment, which is covered by appended claim 1, a docking station is provided, which includes:
a docking body, provided with an accommodating cavity and a first side surface and a second side surface adjacent to the first side surface, the first side surface of the docking body is provided with an opening arranged in communication with the accommodating cavity, the second side surface is provided with a first sliding slot arranged in communication with the accommodating cavity, and a cavity wall of the accommodating cavity of the docking body is provided with a first limiting groove; and
a male connector, including a connecting body accommodated in the accommodating cavity, a male plug, a pushing button, and a limiting block that are connected to the connecting body; the male plug is matched with the opening, the pushing button is fitted with the first sliding slot to drive the male connector to switch between an accommodated state and an exposed state; the male plug is penetrated through the opening to be exposed when the male connector is in the exposed state; and the male plug is accommodated inside the opening and the limiting block is elastically limited in the first limiting groove, when the male connector is in the accommodated state;
the pushing button and the limiting block are arranged at a same side of the connecting body; and
the male connector further includes a movable plate with one end rotatably connected with the connecting body, and an elastic member elastically held between the movable plate and the connecting body; and the pushing button and the limiting block are arranged at a side of the movable plate facing away from the connecting body.

In an embodiment, the cavity wall of the accommodating cavity of the docking body is further provided with a second limiting groove spaced apart from the first limiting groove, a layout path from the second limiting groove to the first limiting groove is parallel to an extension direction of the first sliding slot; and the male plug is penetrated through the opening to be exposed and the limiting block is limited in the second limiting groove, when the male connector is in the exposed state.

In an embodiment, the elastic member is positioned in alignment with the pushing button.

In an embodiment, a side of the movable plate facing away from the pushing button is provided with a first accommodating hole configured for accommodating a part of the elastic member, and a side of the connecting body facing the movable plate is provided with a second accommodating hole configured for accommodating a part of the elastic member.

In an embodiment, the movable plate is provided with a rotating end rotatably connected with the connecting body and a free end opposite to the rotating end, the limiting block is arranged at the free end, and the pushing button is arranged at a middle of the limiting block and the rotating end.

In an embodiment, the docking body includes:
a housing assembly, including a first housing and a second housing detachably connected to each other, and the first housing and the second housing are jointly enclosed to form the accommodating cavity, the first housing is provided with a plurality of expansion ports arranged in communication with the accommodating cavity, and the second housing is provided with the opening and the first sliding slot;
a circuit board, accommodated in the accommodating cavity, and the circuit board is connected with a plurality of docking interfaces matched with the plurality of expansion ports in a one-to-one manner, and the circuit board is electrically connected with the male connector.

In an embodiment, the housing assembly further includes a separating plate detachably connected with the second housing, and the separating plate is arranged between the circuit board and the male connector, and the separating plate is configured for dividing the accommodating cavity into a first cavity arranged in the first housing and configured for accommodating the circuit board, and a second cavity arranged in the second housing and configured for accommodating the male connector.

In an embodiment, the male connector is electrically connected with the circuit board through an electrical connection structure, the separating plate is provided with a second sliding slot, an extension direction of the second sliding slot is parallel to an extension direction of the first sliding slot, the second sliding slot is arranged penetrating through a depth direction of the second sliding slot, and the electrical connection structure is inserted in and connected to the second sliding slot.

In an embodiment, the electrical connection structure is a flexible circuit board.

In an embodiment, a side of the separating plate facing the first housing is provided with a first insertion groove, and the first insertion groove is configured for enabling the circuit board to be plugged therein.

In an embodiment, the second housing is provided with a first sliding rail and a second sliding rail opposite to each other, the first sliding rail and the second sliding rail are arranged away from an end portion of the first side surface and in communication with an outside, and the separating plate is capable of sliding between the first sliding rail and the second sliding rail.

In an embodiment, one of the first housing and the second housing is convexly provided with an engagement structure and the other of the first housing and the second housing is concavely provided with an engagement groove configured for matching with the engagement structure.

In an embodiment, one side of the first housing is provided with the expansion ports, an inner side of the other side of the first housing is provided with a third sliding rail, the third sliding rail is arranged adjacent to an end portion of the second housing and in communication with the outside, and the circuit board is capable of sliding on the third sliding rail.

In an embodiment, the first housing includes a housing body and an end plate detachably connected to a side of the housing body away from the second housing, a side of the end plate facing the housing body is provided with a second insertion groove, and the second insertion groove is configured for enabling the circuit board to be plugged therein.

### BENEFICIAL EFFECTS

The beneficial effects of the docking station provided by the embodiment of the present application are that:

When the docking station provided by the embodiment of the present is accommodated, the male connector can be switched from the exposed state to the accommodated state by pushing the pushing button, so as to accommodate the male plug inside the opening, thus the entire male connector can be accommodated in the accommodating cavity. Moreover, the male connector can be stabilized in the accommodated state without an external force by elastically limiting the limiting block in the first limiting groove; based on this, the accommodation and protection of the male plug can be reliably achieved when the docking station is not used, thus the accommodation and protection of the male connector is realized, the risk of damage to the male connector can be reduced, the service performance of the docking station can be ensured in a certain degree, and the service life of the docking station is extended.

### BRIEF DESCRIPTION OF THE DRAWINGS

In order to explain the embodiments of the present application more clearly, a brief introduction regarding the accompanying drawings that need to be used for describing the embodiments of the present application or the prior art is given below; it is obvious that the accompanying drawings described as follows are only some embodiments of the present application, for those skilled in the art, other drawings can also be obtained according to the current drawings on the premise of paying no creative labor.
FIG. 1 is a first schematic perspective view of a docking station provided by an embodiment of the present application;
FIG. 2 is a second schematic perspective view of a docking station provided by an embodiment of the present application;
FIG. 3 is a schematic view of a male connector in an accommodated state provided by an embodiment of the present application;
FIG. 4 is a schematic view of a male connector switching from an accommodated state to an exposed state provided by an embodiment of the present application;
FIG. 5 is a schematic view of a male connector in an exposed state provided by an embodiment of the present application;
FIG. 6 is an exploded view of a docking station provided by an embodiment of the present application;
FIG. 7 is a schematic view of an assembly of a second housing, a separating plate and a male connector provided by an embodiment of the present application;
FIG. 8 is a first exploded view of a second housing, a separating plate and a male connector provided by an embodiment of the present application;
FIG. 9 is a second exploded view of a second housing, a separating plate and a male connector provided by an embodiment of the present application; and
FIG. 10 is a schematic perspective view of a first housing provided by an embodiment of the present application.

In the drawings, the reference numerals are listed:
100-docking body, 101-accommodating cavity, 1011-first limiting groove, 1012-second limiting groove, 1013-first cavity, 1014-second cavity; 102-first side surface, 1021-opening; 103-second side surface, 1031-first sliding slot; 110-housing assembly, 111-first housing, 1111-expansion port, 1112-engagement groove, 1113-third sliding rail, 1114-housing body, 1115-end plate, 1116-second insertion groove; 112-second housing, 1121-first sliding rail, 1122-second sliding rail, 1123-engagement structure; 113-separating plate, 1131-second sliding slot, 1132-first insertion groove; 120-circuit board, 121-docking interface; 200-male connector, 210- connecting body, 211- second accommodating hole, 220- male plug, 230- pushing button, 240- limiting block, 250- movable plate, 251- first accommodating hole, 252- rotating end, 253- free end, 260- elastic member, 270- electrical connection structure.

### DETAILED DESCRIPTION OF EMBODIMENTS

In order to make the purpose, the technical solution and the advantages of the present application be clearer and more understandable, the present application will be further described in detail below with reference to accompanying figures and embodiments. It should be understood that the specific embodiments described herein are merely intended to illustrate but not to limit the present application.

In the description of the present application, it needs to be understood that, directions or location relationships indicated by terms such as "length", "width", "up", "down", "front", "rear", "left", "right", "vertical", "horizontal", "top", "bottom", "inside", "outside", and so on are the directions or location relationships shown in the accompanying figures, which are only intended to describe the present application conveniently and simplify the description, but not to indicate or imply that an indicated device or component must have specific locations or be constructed and manipulated according to specific locations; therefore, these terms shouldn't be considered as any limitation to the present application.

In addition, terms "the first" and "the second" are only used in describe purposes, and should not be considered as indicating or implying any relative importance, or impliedly indicating the number of indicated technical features. As such, technical feature(s) restricted by "the first" or "the second" can explicitly or impliedly include one or more such technical feature(s). In the description of the present application, "a plurality of" means two or more, unless there is additional explicit and specific limitation.

In the present application, unless there is additional explicit stipulation and limitation, terms such as "mount", "connect with each other", "connect", "fix", and so on should be generally interpreted, for example, "connect" can be interpreted as being fixedly connected, detachably connected, or connected integrally; "connect" can also be interpreted as being mechanically connected or electrically connected; "connect" can be further interpreted as being directly connected or indirectly connected through intermediary, or being internal communication between two components or an interaction relationship between the two components. For the one of ordinary skill in the art, the specific meanings of the aforementioned terms in the present application can be interpreted according to specific conditions.

In order to make the purpose, the technical solution and the advantages of the present application be clearer and more understandable, herein, the present application is further described in detail below with reference to accompanying figures and embodiments.

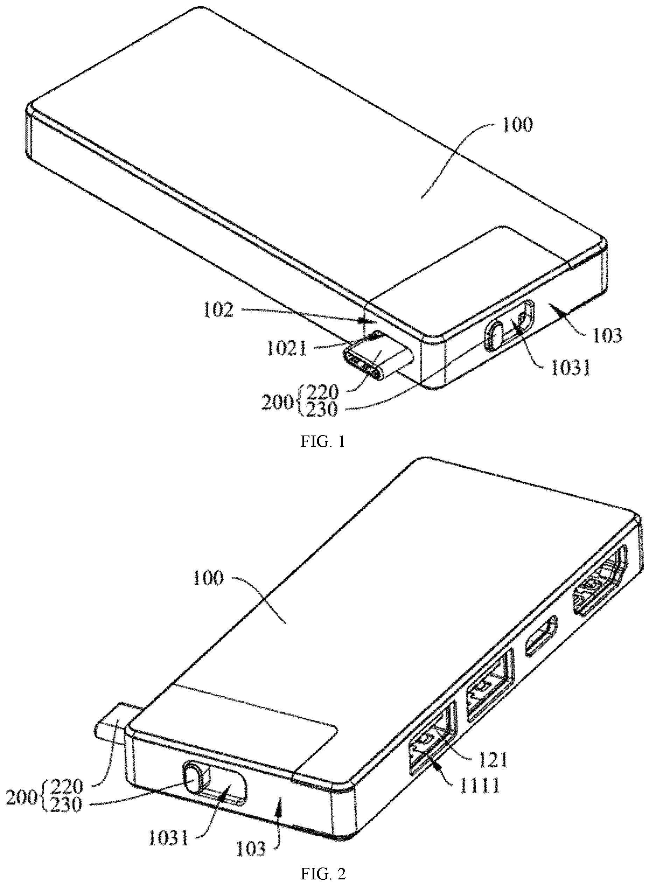

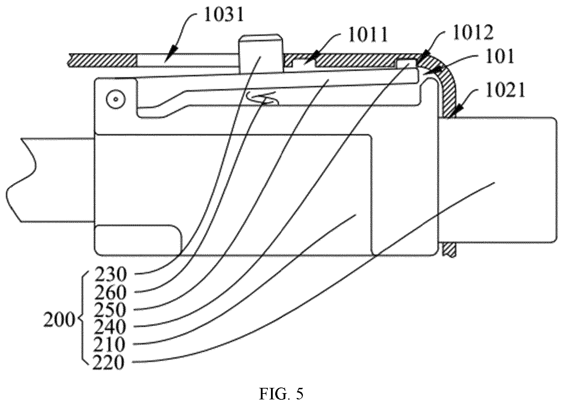

As shown in FIG. 1, FIG. 3, FIG. 4, and FIG. 5, some embodiments of the present application provide a docking station, the docking station includes a docking body 100 and a male connector 200. The docking body 100 is provided with an accommodating cavity 101, and a first side surface 102 and a second side surface 103 adjacent to the first side surface 102, the first side surface 102 of the docking body 100 is provided with an opening 1021 arranged in communication with the accommodating cavity 101, and the second side surface 102 is provided with a first sliding slot 1031 arranged in communication with the accommodating cavity 101, a cavity wall of the accommodating cavity 101 of the docking body 100 is further provided with a first limiting groove 1011; the male connector 200 includes a connecting body 210 accommodated in the accommodating cavity 101, a male plug 220, a pushing button 230 and a limiting block 240 that are all connected to the connecting body 210. The male plug 220 is matched with the opening 1021. The pushing button 230 is slid in and fitted with the first sliding slot 1031 to drive the male connector 200 to switch between an accommodated state and an exposed state. When the male connector 200 is in the exposed state, the male plug 220 is penetrated through the opening 1021 and to be exposed, and when the male connector 200 is in the accommodated state, the male plug 220 is accommodated inside the opening 1021, and the limiting block 240 is elastically limited in the first limiting groove 1011.

It should be noted here that the adjacent first side surface 102 and second side surface 103 are basically perpendicular to each other. Based on this, the penetrating path of opening 1021 on the first side surface 102 can be basically parallel to the second side surface 103, so that it is convenient to arrange the first sliding slot 1031 on the second side surface 103 for guiding a moving path of the male connector 200. Optionally, the extension path of the first sliding slot 1031 is parallel to the penetrating path of the opening 1021, so that the male plug 220 can be smoothly extended and retracted relative to the opening 1021, the risk of stuck is reduced.

It should also be noted here that the extension length of the first sliding slot 1031 limits the sliding range of the pushing button 230 in the first sliding slot 1031, specifically, the pushing button 230 can be slid back and forth in the first sliding slot 1031 by pushing the pushing button 230, such that the male connector 200 can be enabled to switch between the accommodated state and the exposed state. When the male connector 200 switches from the accommodated state to the exposed state, the pushing button 230 drives the male connector 200 to move in the direction close to the opening 1021, until the male plug 220 extends out from the opening 1021, and is at least partially exposed to the opening 1021, at this time, the male plug 220 can be used to electrically connect with electronic products such as notebooks and tablets to use the docking station. Conversely, when the male connector 200 switches from the exposed state to the accommodated state, the pushing button 230 moves the male connector 200 away from the opening 1021, until the male plug 220 is accommodated inside the opening 1021, that is, accommodated in the accommodating cavity 101, at this time, the accommodation and protection of the male plug 220 can be realized, that is, the accommodation and protection of the male connector 200 are realized.

It should also be noted that when the male connector 200 is in the accommodated state, the limiting block 240 can be elastically limited in the first limiting groove 1011. Based on this, the male connector 200 can be stabilized in the accommodated state without sufficient external force, and can be pushed out from the first limiting groove 1011 when there is sufficient pushing force, and move synchronously with the male connector 200. Thus, the accommodated effect of the male connector 200 in the accommodated state can be guaranteed, and the risk of damage caused by the male plug 220 being mistakenly thrown out can be reduced.

In summary, when the docking station provided by the embodiment of the present is accommodated, the male connector 200 can be switched from the exposed state to the accommodated state by pushing the pushing button 230, so as to accommodate the male plug 220 inside the opening 1021, thus the entire male connector 200 can be accommodated in the accommodating cavity 101. Moreover, the male connector 200 can be stabilized in the accommodated state without the sufficient external force by elastically limiting the limiting block 240 in the first limiting groove 1011; based on this, the accommodation and protection of the male plug 220 can be reliably achieved when the docking station is not used, thus the accommodation and protection of the male connector 200 is realized, the risk of damage to the male connector 200 can be reduced, the service performance of the docking station can be ensured in a certain degree, and the service life of the docking station is extended.

Alternatively, the docking station can be miniaturized or even reduced to the size of a bank card, which can improve the portability and accommodation convenience of the docking station.

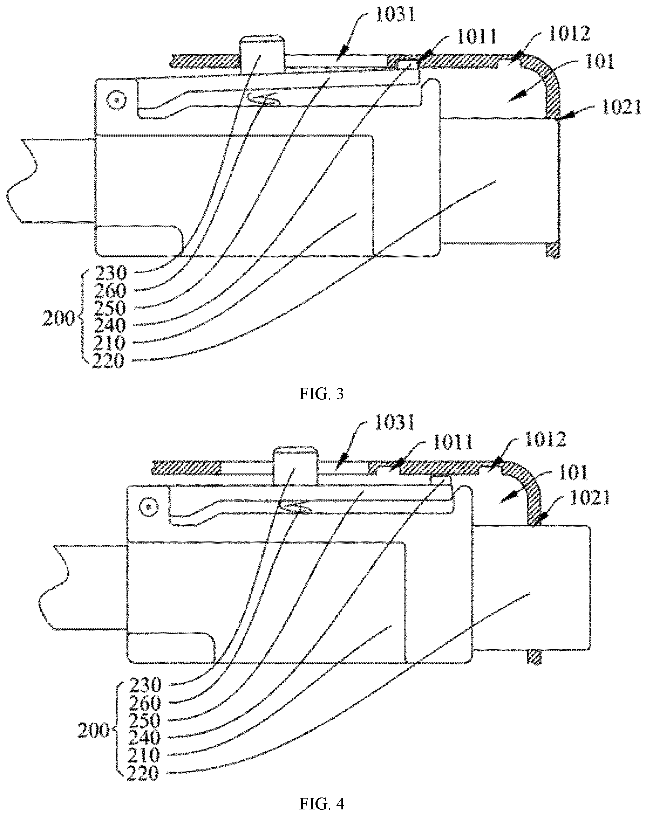

As shown in FIG. 3, FIG. 4, and FIG. 5, in the embodiment, the cavity wall of the accommodating cavity 101 of the docking body 100 is further provided with a second limiting groove 1012 spaced apart from the first limiting groove 1011, a layout path from the second limiting groove 1012 to the first limiting groove 1011 is parallel to an extension direction of the first sliding slot 1031; and the male plug 220 is penetrated through the opening 1021 to be exposed and the limiting block 240 is limited in the second limiting groove 1012, when the male connector 200 is in the exposed state.

It should be noted here that when pushing button 230 forces the male connector 200 from the accommodated state to the exposed state, the limiting block 240 can exit the first limiting groove 1011 and elastically limit in the second limiting groove 1012 when the limiting block 240 moves to the second limiting groove 1012. At this time, the male plug 220 has been extended from the opening 1021 and is at least partially exposed to the opening 1021. In addition, the male connector 200 can be stabilized in the exposed state when the limiting block 240 is elastically limited in the second limiting groove 1012 and there is no sufficient external force, which is easy to plug and unplug the male plug 220 and improve the performance of the male connector 200, that is, the performance of the docking station is improved.

As shown in FIG. 3, FIG. 5, and FIG. 8, in the embodiment, the pushing button 230 and the limiting block 240 are arranged at a same side of the connecting body 210.

By adopting the above solution, the arrangement of the pushing button 230 and the first sliding slot 1031 cooperated with the pushing button 230 can be referred to directly plan and design the arrangement of the pushing button 230, the first limiting groove 1011 and the second limiting groove 1012 cooperated with the pushing button 230, so as to reduce the design difficulty and beneficial to improve the fit accuracy between the pushing button 230 and the first sliding slot 1031, as well as the limiting block 240 and the first limiting groove 1011 and the second limiting groove 1012.

As shown in FIG. 3, FIG. 5, and FIG. 8, in the embodiment, the male connector 200 further includes a movable plate 250 with one end rotatably connected with the connecting body 210, and an elastic member 260 elastically held between the movable plate 250 and the connecting body 210; and the pushing button 230 and the limiting block 240 are arranged at a side of the movable plate 250 facing away from the connecting body 210.

It should be noted here that when the pushing button 230 is subjected to a pressing force, the pressing force can cause the movable plate 250 to rotate to the side close to the connecting body 210 and compress the elastic member 260, and then the limiting block 240 exits out the first limiting groove 1011 or the second limiting groove 1012, then the pushing button 230 can be moved to drive the male connector 200 to switch between the accommodated state and the exposed state; during the switching, if the limiting block 240 is not moved to the first limiting groove 1011 or the second limiting groove 1012 and the pressing force is not removed, although the limiting block 240 can elastically abut against the cavity wall of the accommodating cavity 101 under the action of the elastic member 260, but it will not hinder the movement of the male connector 200. If the limiting block 240 is moved to the first limiting groove 1011 or the second limiting groove 1012 and the pressing force is removed, the elastic member 260 can recover the elastic deformation and push the limiting block 240 so that the limiting block 240 elastically limited in the first limiting groove 1011 or the second limiting groove 1012, the male connector 200 is stable in the accommodated state or the exposed state.

Therefore, by adopting the above scheme, the limiting block 240 can be elastically limited in the first limiting groove 1011 or the second limiting groove 1012 by the elastic member 260, and the limiting block 240 can release the limiting relationship with the first limiting groove 1011 or the second limiting groove 1012 by the pushing button 230. Based on this, on the basis of ensuring the state stability of the male connector 200 in the accommodated state and the exposed state, the operation convenience of switching between the male connector 200 in the accommodated state and the exposed state can be improved, thus the service performance of the docking station is improved.

The movable space of the movable plate 250 does not need to be too large to ensure that the pushing button 230 will not completely exit the first sliding slot 1031 when being pressed, which can ensure the performance of the docking station.

As shown in FIG. 3, FIG. 5, and FIG. 8, in the embodiment, the elastic member 260 is positioned in alignment with the pushing button 230.

By adopting the above scheme, the pressing force acting on the pushing button 230 can be directly concentrated on the elastic member 260, which facilitates the elastic member 260 to quickly and instantly deform under the action of the pressing force. Thus, the movable plate 250 can be made to rotate quickly and instantly to a certain extent, and drive the limiting block 240 to exit out of the first limiting groove 1011 or the second limiting groove 1012, the convenience and smoothness of related operations can be improved, the risk of stuck is reduced, and thus improve the performance of the docking station.

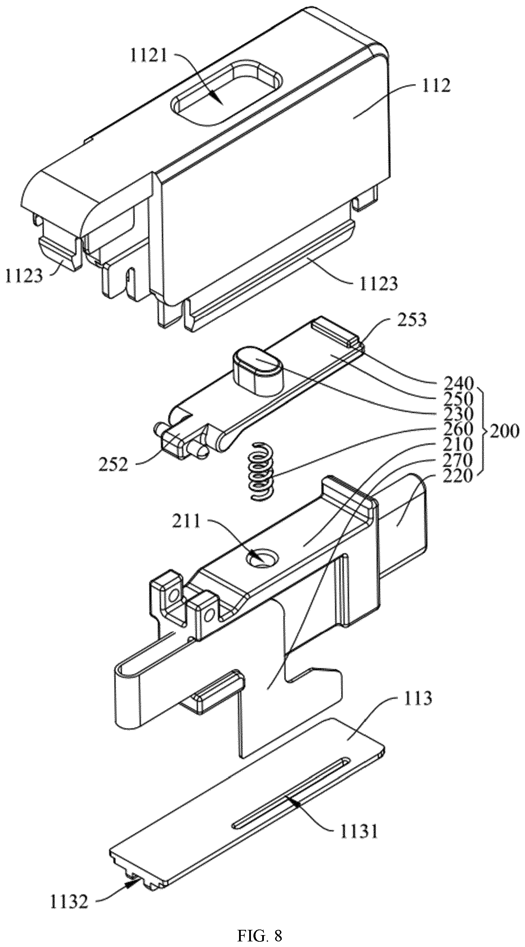

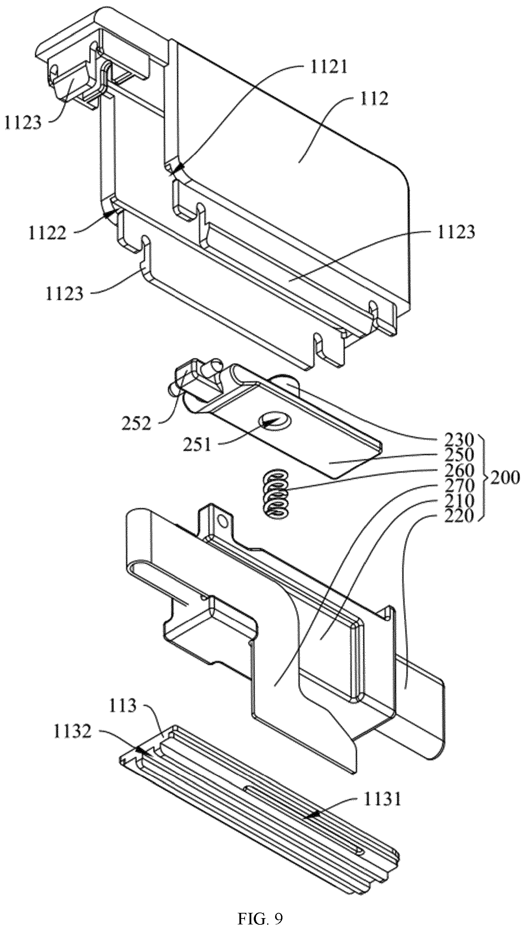

As shown in FIG. 8 and FIG. 9, in the present embodiment, a side of the movable plate 250 facing away from the pushing button 230 is provided with a first accommodating hole 251 configured for accommodating a part of the elastic member 260, and a side of the connecting body 210 facing the movable plate 250 is provided with a second accommodating hole 211 configured for accommodating a part of the elastic member 260.

By adopting the above scheme, one end of the elastic member 260 can be accommodated and limited in the first accommodating hole 251, the other end of the elastic member 260 is accommodated and limited in the second accommodating hole 211, and then the elastic member 260 is held between the movable plate 250 and the connecting body 210. Based on this, it can help stabilize the relative position relationship between the elastic member 260 and the movable plate 250 as well as the connecting body 210, the risk of the elastic member 260 being separated from the movable plate 250 and the connecting body 210 during the elastic deformation and the recovery of elastic deformation is reduced, thus ensuring the service performance of the male connector 200 and the service performance of the docking station, and the service life of the docking station is extended.

As shown in FIG. 3, FIG. 5, and FIG. 8, in the embodiment, the movable plate 250 is provided with a rotating end 252 rotatably connected with the connecting body 210 and a free end 253 opposite to the rotating end 252, the limiting block 240 is arranged at the free end 253, and the pushing button 230 is arranged at a middle of the limiting block 240 and the rotating end 252.

By adopting the above scheme, the force arm between the pushing button 230 and the elastic member 260 to the limiting block 240, as well as the force arm between the pushing button 230 and the elastic member 260 to rotating end 252 can be balanced, so as to achieve a labor-saving effect, and to achieve a smaller pressing force to drive the movable plate 250 to rotate around the rotating end 252, and basically drive the limiting block 240 away from the first limiting groove 1011 or the second limiting groove 1012 at the same time, thus improving the operation convenience of related operations. The service performance of the male connector 200 and the service performance of the docking station are improved.

As shown in FIG. 1, FIG. 2, and FIG. 6, in the embodiment, the docking body 100 includes a housing assembly 110 and a circuit board 120, the housing assembly 110 includes a first housing 111 and a second housing 112 detachably connected to each other, and the first housing 111 and the second housing 112 are jointly enclosed to form the accommodating cavity 101, the first housing 111 is provided with a plurality of expansion ports 1111 arranged in communication with the accommodating cavity 101, and the second housing 112 is provided with the opening 1021 and the first sliding slot 1031; the circuit board 120 is accommodated in the accommodating cavity 101, and the circuit board 120 is connected with a plurality of docking interfaces 121 matched with the plurality of expansion ports 1111 in a one-to-one manner, and the circuit board 120 is electrically connected with the male connector 200.

It should be noted here that during assembly, the circuit board 120 can be firstly placed into the first housing 111, the docking interfaces 121 of circuit board 120 are matched with the expansion ports 1111 in a one-to-one manner, and the male connector 200 is then placed in the second housing 112, the male plug 220 is aligned with the opening 1021 and the pushing button 230 is slid and matched with the first sliding slot 1031, finally, the first housing 111 and the second housing 112 are detachably connected, and the assembly operation is very convenient. The male connector 200 is electrically connected with the circuit board 120, to realize the electrical connection of the male connector 200 to the docking interfaces 121.

Alternatively, the docking interfaces 121 can be, but are not limited to, a Secure Digital Memory Card (SD) interface or an Universal Serial Bus (USB) interface. Universal serial bus) Interface, a High Definition Multimedia Interface (HDMI), a Type-C interface (a connection interface of USB interface, which can be inserted regardless of both sides), and an Audio interface. The SD card interface can be used to plug and remove an SD card, the USB interface can be used to plug a USB flash drive, a mouse, a keyboard, or a mobile hard disk, etc., the HDMI interface can be used to plug devices such as the display screen, the Type-C interface can be used to plug devices to be charged for fast charging, and the Audio interface can be used to plug devices such as headphones.

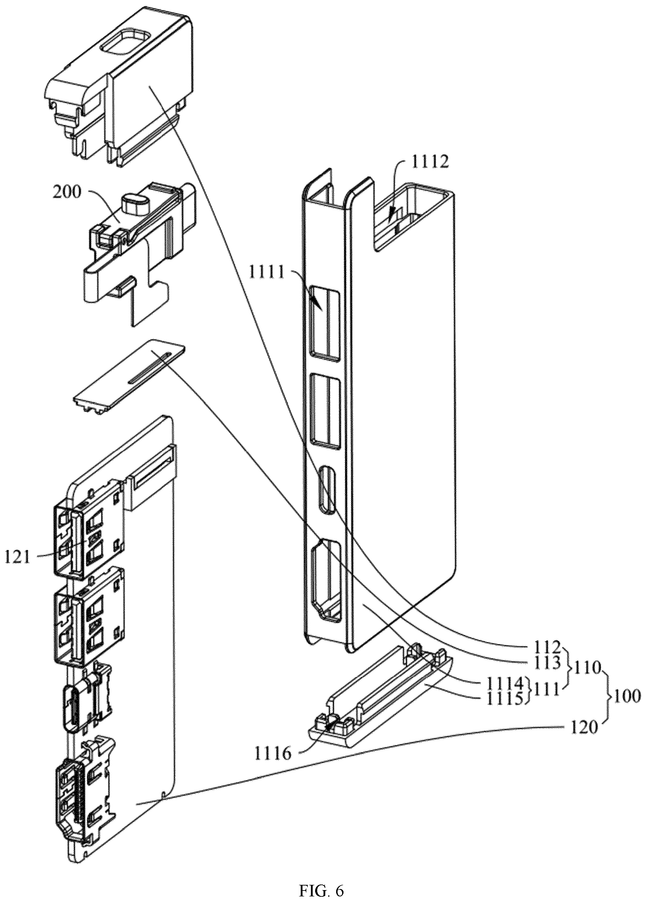

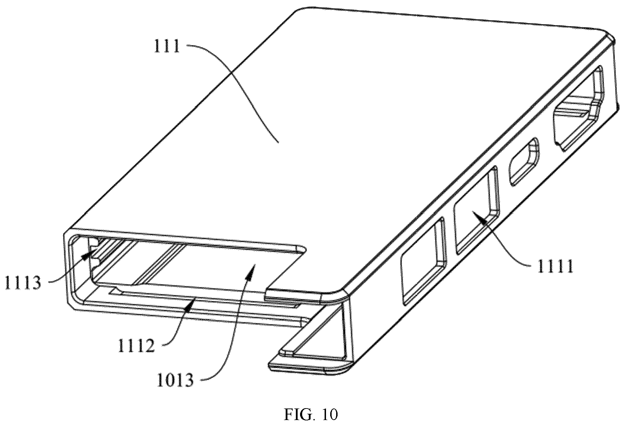

As shown in FIG. 6, FIG. 7, and FIG. 10, in the embodiment, the housing assembly 110 further includes a separating plate 113 detachably connected with the second housing 112, and the separating plate 113 is arranged between the circuit board 120 and the male connector 200, and the separating plate 113 is configured for dividing the accommodating cavity 101 into a first cavity 1013 arranged in the first housing 111 and configured for accommodating the circuit board 120, and a second cavity 1014 arranged in the second housing 112 and configured for accommodating the male connector 200.

By adopting the above scheme, the first cavity 1013 accommodating the circuit board 120 can be relatively separated from the second cavity 1014 accommodating the male connector 200. Based on this, the interference between the circuit board 120 and the male connector 200 can be reduced to a certain extent, especially when the male connector 200 is switched between the accommodated state and the exposed state, the influence of the movement of the male connector 200 to the circuit board 120 is reduced. Thus the service performance of the docking station is improved, and the service life of the docking station is extended.

As shown in FIG. 6, FIG. 7, and FIG. 8, in the embodiment, the male connector 200 is electrically connected with the circuit board 120 through an electrical connection structure 270, the separating plate 113 is provided with a second sliding slot 1131, an extension direction of the second sliding slot 1131 is parallel to an extension direction of the first sliding slot 1031, the second sliding slot 1131 is arranged penetrating through a depth direction of the second sliding slot 1131, and the electrical connection structure 270 is inserted in and connected to the second sliding slot 1131.

By adopting the above scheme, the electrical connection structure 270 can be inserted into the second sliding slot 1131, so as to realize the electrical connection between the male connector 200 and the circuit board 120, and when the male connector 200 switches between the accommodated state and the exposed state, the electrical connection structure 270 can then be moved in the second sliding slot 1131, and the electrical connection between the male connector 200 and the circuit board 120 is continuously disconnected, so that the stability and reliability of the electrical connection between the male connector 200 and the circuit board 120 are improved on the basis of reducing the interference between the circuit board 120 and the male connector 200.

As shown in FIG. 6, FIG. 7, and FIG. 8, in the embodiment, the electrical connection structure 270 is a flexible circuit board.

By adopting the above scheme, the stability and reliability of the electrical connection between the male connector 200 and the circuit board 120 can be improved by a flexible and stroke reserved flexible circuit board. Even the reciprocating sliding of the flexible circuit board in the second sliding slot 1131 can also improve the movement smoothness of the male connector 200 to a certain extent, so as to improve the service performance of the docking station.

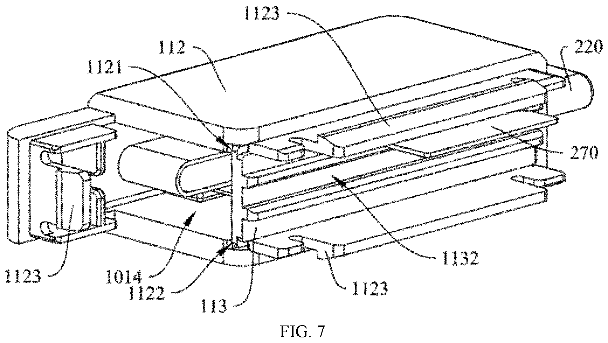

As shown in FIG. 7, FIG. 8, and FIG. 9, in the embodiment, a side of the separating plate 113 facing the first housing 111 is provided with a first insertion groove 1132, and the first insertion groove 1132 is configured for enabling the circuit board 120 to be plugged therein.

By adopting the above scheme, the circuit board 120 can be inserted into the first insertion groove 1132 from the side close to the separating plate 113 during assembly, then the assembly is realized by detachable connection of the first housing 111 and the second housing 112. Based on this, the position accuracy of the first housing 111, the separating plate 113, the second housing 112 and the circuit board 120 between each other can be improved, and the placement status and setting position of the circuit board 120 can be preliminarily stabilized by the first insertion groove 1132, so as to facilitate the maintenance of high-precision alignment between docking interfaces 121 and expansion ports 1111. It is beneficial to reduce the assembly difficulty of the docking station, improve the assembly efficiency and improve the service performance.

As shown in FIG. 7 and FIG. 9, in the embodiment, the second housing 112 is provided with a first sliding rail 1121 and a second sliding rail 1122 opposite to each other, the first sliding rail 1121 and the second sliding rail 1122 are arranged away from an end portion of the first side surface 102 and in communication with an outside, and the separating plate 113 is capable of sliding between the first sliding rail 1121 and the second sliding rail 1122.

By adopting the above scheme, the separating plate 113 slides into the first sliding rail 1121 and the second sliding rail 1122 from the end of the first sliding rail 1121 and the second sliding rail 1122 away from the first side surface 102, so as to conveniently and reliably connect to the second housing 112, the connection is reliable, the assembly operation is convenient, and the relative position between the separating plate 113 and the second housing 112 is fixed after assembly, thus improving the assembly efficiency and the service performance of the docking station.

As shown in FIG. 7, FIG. 8, and FIG. 9, in the embodiment, one of the first housing 111 and the second housing 112 is convexly provided with an engagement structure 1123 and the other of the first housing 111 and the second housing 112 is concavely provided with an engagement groove 1112 capable of matching with the engagement structure 1123.

By adopting the above scheme, each engagement structure 1123 can be engaged with each engagement groove 1112, which is convenient to achieve a reliable connection between the first housing 111 and the second housing 112, and maintain a relative fixed between the first housing 111 and the second housing 112, thus, the protective effect of first housing 111 and second housing 112 onto the circuit board 120 and the male connector 200 in the accommodating cavity 101 can be guaranteed. The service performance of the docking station is improved, and the service life of the docking station is extended.

As shown in FIG. 2, FIG. 6, and FIG. 10, in the embodiment, one side of the first housing 111 is provided with the expansion ports 1111, an inner side of the other side of the first housing 111 is provided with a third sliding rail 1113, the third sliding rail 1113 is arranged adjacent to an end portion of the second housing 112 and in communication with the outside, and the circuit board 120 is capable of sliding on the third sliding rail 1113.

By adopting the above scheme, the circuit board 120 can be slid into the third sliding rail 1113 from the side close to the second housing 112 during assembly. The relative position of the circuit board 120 relative to the second housing 112 is stable, further, the third sliding rail 1113 and the expansion ports 1111 are arranged on both sides of the second housing 112, such that the circuit board 120 can be stably placed relative to the second housing 112. Therefore, it is convenient to maintain the high-precision alignment between the docking interfaces 121 and the expansion ports 1111, and improve the service performance of the docking dock.

As shown in FIG. 6, in this embodiment, the first housing 111 includes a housing body 1114 and an end plate 1115 detachably connected to a side of the housing body 1114 away from the second housing 112, a side of the end plate 1115 facing the housing body 1114 is provided with a second insertion groove 1116, and the second insertion groove 1116 is configured for enabling the circuit board 120 to be plugged therein.

By adopting the above scheme, the end plate 1115 can be formed independently to facilitate the processing of the second insertion groove 1116, the housing body 1114 is then connected with the end plate 1115 to form the first housing 111, and the circuit board 120 is finally slid into the third sliding rail 1113 from the side close to the second housing 112, and the side of the circuit board 120 away from the second housing is inserted into the second insertion groove 1116, and the circuit board 120 is limited and accommodated in the second housing 112. Based on this, the third sliding rail 1113 and the second insertion groove 1116 can jointly maintain the arrangement position and placement state of the circuit board 120 relative to the second housing 112, that is, can improve the position stability and state stability of the circuit board 120 relative to the second housing 112, so as to facilitate the maintenance of high-precision alignment between the docking interfaces 121 and the expansion ports 1111, which can improve the service performance of the docking station.

## Claims

1. A docking station, comprising:
a docking body (100), provided with an accommodating cavity (101), a first side surface (102), and a second side surface (103) adjacent to the first side surface (102); wherein the first side surface (102) of the docking body (100) is provided with an opening (1021) arranged in communication with the accommodating cavity (101), the second side surface (103) is provided with a first sliding slot (1031) arranged in communication with the accommodating cavity (101), and a cavity wall of the accommodating cavity (101) of the docking body (100) is provided with a first limiting groove (1011); and
a male connector (200), comprising a connecting body (210) accommodated in the accommodating cavity (101), and a male plug (220), a pushing button (230), and a limiting block (240) that are connected to the connecting body (210); wherein the male plug (220) is matched with the opening (1021), the pushing button (230) is fitted with the first sliding slot (1031) to drive the male connector (200) to switch between an accommodated state and an exposed state; the male plug (220) is penetrated through the opening (1021) to be exposed when the male connector (200) is in the exposed state; and the male plug (220) is accommodated inside the opening (1021) and the limiting block (240) is elastically limited in the first limiting groove (1011), when the male connector (200) is in the accommodated state;
wherein the pushing button (230) and the limiting block (240) are arranged at a same side of the connecting body (210);
**characterized in that** the male connector (200) further comprises a movable plate (250) with one end rotatably connected with the connecting body (210), and an elastic member (260) elastically held between the movable plate (250) and the connecting body (210); and the pushing button (230) and the limiting block (240) are arranged at a side of the movable plate (250) facing away from the connecting body (210).

2. The docking station according to claim 1, wherein the cavity wall of the accommodating cavity (101) of the docking body (100) is further provided with a second limiting groove (1012) spaced apart from the first limiting groove (1011), a layout path from the second limiting groove (1012) to the first limiting groove (1011) is parallel to an extension direction of the first sliding slot (1031); and when the male connector (200) is in the exposed state, the male plug (220) is penetrated through the opening (1021) to be exposed and the limiting block (240) is limited in the second limiting groove (1012).

3. The docking station according to claim 1, wherein the elastic member (260) is positioned in alignment with the pushing button (230).

4. The docking station according to claim 3, wherein a side of the movable plate (250) facing away from the pushing button (230) is provided with a first accommodating hole (251) configured for accommodating a part of the elastic member (260), and a side of the connecting body (210) facing the movable plate (250) is provided with a second accommodating hole (211) configured for accommodating a part of the elastic member (260).

5. The docking station according to claim 3, wherein the movable plate (250) is provided with a rotating end (252) rotatably connected with the connecting body (210) and a free end (253) opposite to the rotating end (252), the limiting block (240) is arranged at the free end (253), and the pushing button (230) is arranged at a middle of the limiting block (240) and the rotating end (252).

6. The docking station according to claim 1, wherein the docking body (100) comprises:
a housing assembly (110), comprising a first housing (111) and a second housing (112) detachably connected to each other, and wherein the first housing (111) and the second housing (112) are jointly enclosed to form the accommodating cavity (101), the first housing (111) is provided with a plurality of expansion ports (1111) arranged in communication with the accommodating cavity (101), and the second housing (112) is provided with the opening (1021) and the first sliding slot (1031);
a circuit board (120), accommodated in the accommodating cavity (101), and wherein the circuit board (120) is connected with a plurality of docking interfaces (121) matched with the plurality of expansion ports (1111) in a one-to-one manner, and the circuit board (120) is electrically connected with the male connector (200).

7. The docking station according to claim 6, wherein the housing assembly (110) further comprises a separating plate (113) detachably connected with the second housing (112), and the separating plate (113) is arranged between the circuit board (120) and the male connector (200), and the separating plate (113) is configured for dividing the accommodating cavity (101) into a first cavity (1013) arranged in the first housing (111) and configured for accommodating the circuit board (120), and a second cavity (1014) arranged in the second housing (112) and configured for accommodating the male connector (200).

8. The docking station according to claim 7, wherein the male connector (200) is electrically connected with the circuit board (120) through an electrical connection structure (270), the separating plate (113) is provided with a second sliding slot (1131), an extension direction of the second sliding slot (1131) is parallel to an extension direction of the first sliding slot (1031), the second sliding slot (1131) is arranged penetrating through a depth direction of the second sliding slot (1131), and the electrical connection structure (270) is inserted in and connected to the second sliding slot (1131).

9. The docking station according to claim 7, wherein a side of the separating plate (113) facing the first housing (111) is provided with a first insertion groove (1132), and the first insertion groove (1132) is configured for enabling the circuit board (120) to be plugged therein.

10. The docking station according to claim 7, wherein the second housing (112) is provided with a first sliding rail (1121) and a second sliding rail (1122) opposite to each other, the first sliding rail (1121) and the second sliding rail (1122) are arranged away from an end portion of the first side surface (102) and in communication with an outside, and the separating plate (113) is capable of sliding between the first sliding rail (1121) and the second sliding rail (1122).

11. The docking station according to claim 6, wherein one of the first housing (111) and the second housing (112) is convexly provided with an engagement structure (1123) and the other of the first housing (111) and the second housing (112) is concavely provided with an engagement groove (1112) configured for matching with the engagement structure (1123).

12. The docking station according to claim 6, wherein one side of the first housing (111) is provided with the plurality of expansion ports (1111), an inner side of the other side of the first housing (111) is provided with a third sliding rail (1113), the third sliding rail (1113) is arranged adjacent to an end portion of the second housing (112) and in communication with the outside, and the circuit board (120) is capable of sliding on the third sliding rail (1113).

13. The docking station according to claim 12, wherein the first housing (111) comprises a housing body (1114) and an end plate (1115) detachably connected to a side of the housing body (1114) away from the second housing (112), a side of the end plate (1115) facing the housing body (1114) is provided with a second insertion groove (1116), and the second insertion groove (1116) is configured for enabling the circuit board (120) to be plugged therein.

## Patentansprüche

1. Dockingstation, umfassend:
einen Dockingkörper (100), versehen mit einer Aufnahmekavität (101), einer ersten Seitenfläche (102) und einer zweiten Seitenfläche (103), die an die erste Seitenfläche (102) angrenzt; wobei die erste Seitenfläche (102) des Dockingkörpers (100) mit einer Öffnung (1021) versehen ist, die mit der Aufnahmekavität (101) in Verbindung steht, wobei die zweite Seitenfläche (103) mit einem ersten Gleitschlitz (1031) versehen ist, der mit der Aufnahmekavität (101) in Verbindung steht, und wobei eine Kavitätswand der Aufnahmekavität (101) des Dockingkörpers (100) mit einer ersten Begrenzungsnut (1011) versehen ist; und
einen Steckverbinder (200), umfassend einen Verbindungskörper (210), der in der Aufnahmekavität (101) aufgenommen ist, sowie einen Stecker (220), einen Druckknopf (230) und einen Begrenzungsblock (240), die mit dem Verbindungskörper (210) verbunden sind; wobei der Stecker (220) mit der Öffnung (1021) zusammenwirkt, wobei der Druckknopf (230) mit dem ersten Gleitschlitz (1031) zusammenpasst, um den Steckverbinder (200) zwischen einem aufgenommenen Zustand und einem freigegebenen Zustand zu verschieben; wobei der Stecker (220) durch die Öffnung (1021) hindurchtritt, um freigelegt zu sein, wenn sich der Steckverbinder (200) im freigegebenen Zustand befindet; und wobei der Stecker (220) innerhalb der Öffnung (1021) aufgenommen ist und der Begrenzungsblock (240) elastisch in der ersten Begrenzungsnut (1011) gehalten ist, wenn sich der Steckverbinder (200) im aufgenommenen Zustand befindet;
wobei der Druckknopf (230) und der Begrenzungsblock (240) an derselben Seite des Verbindungskörpers (210) angeordnet sind;
**dadurch gekennzeichnet, dass**
der Steckverbinder (200) ferner eine bewegliche Platte (250), deren eines Ende drehbar mit dem Verbindungskörper (210) verbunden ist, und ein elastisches Element (260) umfasst, das elastisch zwischen der beweglichen Platte (250) und dem Verbindungskörper (210) gehalten ist; und der Druckknopf (230) und der Begrenzungsblock (240) an einer der beweglichen Platte (250) abgewandten Seite des Verbindungskörpers (210) angeordnet sind.

2. Dockingstation nach Anspruch 1, wobei die Kavitätswand der Aufnahmekavität (101) des Dockingkörpers (100) ferner mit einer zweiten Begrenzungsnut (1012) versehen ist, die von der ersten Begrenzungsnut (1011) beabstandet ist, wobei ein Verlaufspfad von der zweiten Begrenzungsnut (1012) zur ersten Begrenzungsnut (1011) parallel zu einer Erstreckungsrichtung des ersten Gleitschlitzes (1031) verläuft und wobei der Stecker (220) im freigegebenen Zustand des Steckverbinders (200) durch die Öffnung (1021) hindurchtritt und freigelegt ist und der Begrenzungsblock (240) in der zweiten Begrenzungsnut (1012) gehalten ist.

3. Dockingstation nach Anspruch 1, wobei das elastische Element (260) in Ausrichtung mit dem Druckknopf (230) positioniert ist.

4. Dockingstation nach Anspruch 3, wobei eine dem Druckknopf (230) abgewandte Seite der beweglichen Platte (250) mit einer ersten Aufnahmebohrung (251) versehen ist, die zum Aufnehmen eines Teils des elastischen Elements (260) ausgebildet ist, und wobei eine der beweglichen Platte (250) zugewandte Seite des Verbindungskörpers (210) mit einer zweiten Aufnahmebohrung (211) versehen ist, die zum Aufnehmen eines Teils des elastischen Elements (260) ausgebildet ist.

5. Dockingstation nach Anspruch 3, wobei die bewegliche Platte (250) mit einem Drehende (252) versehen ist, das drehbar mit dem Verbindungskörper (210) verbunden ist, und einem freien Ende (253), das dem Drehende (252) gegenüberliegt, wobei der Begrenzungsblock (240) am freien Ende (253) angeordnet ist und der Druckknopf (230) zwischen dem Begrenzungsblock (240) und dem Drehende (252) mittig angeordnet ist.

6. Dockingstation nach Anspruch 1, wobei der Dockingkörper (100) umfasst:
eine Gehäuseanordnung (110), umfassend ein erstes Gehäuse (111) und ein zweites Gehäuse (112), die lösbar miteinander verbunden sind, wobei das erste Gehäuse (111) und das zweite Gehäuse (112) gemeinsam die Aufnahmekavität (101) umschließen, wobei das erste Gehäuse (111) mit einer Vielzahl von Erweiterungsanschlüssen (1111) versehen ist, die mit der Aufnahmekavität (101) in Verbindung stehen, und das zweite Gehäuse (112) mit der Öffnung (1021) und dem ersten Gleitschlitz (1031) versehen ist;
eine Leiterplatte (120), die in der Aufnahmekavität (101) aufgenommen ist, wobei die Leiterplatte (120) mit einer Vielzahl von Docking-Schnittstellen (121) verbunden ist, die jeweils einer der Vielzahl von Erweiterungsanschlüssen (1111) zugeordnet sind, und wobei die Leiterplatte (120) elektrisch mit dem Steckverbinder (200) verbunden ist.

7. Dockingstation nach Anspruch 6, wobei die Gehäuseanordnung (110) ferner eine Trennplatte (113) umfasst, die lösbar mit dem zweiten Gehäuse (112) verbunden ist, wobei die Trennplatte (113) zwischen der Leiterplatte (120) und dem Steckverbinder (200) angeordnet ist und die Trennplatte (113) ausgelegt ist, die Aufnahmekavität (101) in eine erste Kavität (1013), die im ersten Gehäuse (111) angeordnet und zum Aufnehmen der Leiterplatte (120) ausgebildet ist, und eine zweite Kavität (1014), die im zweiten Gehäuse (112) angeordnet und zum Aufnehmen des Steckverbinders (200) ausgebildet ist, zu unterteilen.

8. Dockingstation nach Anspruch 7, wobei der Steckverbinder (200) über eine elektrische Verbindungsstruktur (270) elektrisch mit der Leiterplatte (120) verbunden ist, wobei die Trennplatte (113) mit einem zweiten Gleitschlitz (1131) versehen ist, wobei eine Erstreckungsrichtung des zweiten Gleitschlitzes (1131) parallel zu einer Erstreckungsrichtung des ersten Gleitschlitzes (1031) verläuft, wobei sich der zweite Gleitschlitz (1131) durch eine Tiefenrichtung des zweiten Gleitschlitzes (1131) erstreckt und die elektrische Verbindungsstruktur (270) in den zweiten Gleitschlitz (1131) eingeführt und damit verbunden ist.

9. Dockingstation nach Anspruch 7, wobei eine dem ersten Gehäuse (111) zugewandte Seite der Trennplatte (113) mit einer ersten Einführnut (1132) versehen ist und wobei die erste Einführnut (1132) so ausgebildet ist, dass die Leiterplatte (120) darin eingesteckt werden kann.

10. Dockingstation nach Anspruch 7, wobei das zweite Gehäuse (112) mit einer ersten Gleitschiene (1121) und einer zweiten Gleitschiene (1122) versehen ist, die einander gegenüberliegen, wobei die erste Gleitschiene (1121) und die zweite Gleitschiene (1122) von einem Endabschnitt der ersten Seitenfläche (102) beabstandet und mit dem Außenbereich in Verbindung stehen, und wobei die Trennplatte (113) zwischen der ersten Gleitschiene (1121) und der zweiten Gleitschiene (1122) verschiebbar ist.

11. Dockingstation nach Anspruch 6, wobei eines des ersten Gehäuses (111) und des zweiten Gehäuses (112) vorstehend mit einer Eingriffsstruktur (1123) versehen ist und das andere des ersten Gehäuses (111) und des zweiten Gehäuses (112) mit einer Eingriffsnut (1112) versehen ist, die zum Zusammenpassen mit der Eingriffsstruktur (1123) ausgebildet ist.

12. Dockingstation nach Anspruch 6, wobei eine Seite des ersten Gehäuses (111) mit der Vielzahl von Erweiterungsanschlüssen (1111) versehen ist, wobei eine Innenseite der anderen Seite des ersten Gehäuses (111) mit einer dritten Gleitschiene (1113) versehen ist, wobei die dritte Gleitschiene (1113) benachbart zu einem Endabschnitt des zweiten Gehäuses (112) angeordnet und mit dem Außenbereich in Verbindung steht und wobei die Leiterplatte (120) auf der dritten Gleitschiene (1113) verschiebbar ist.

13. Dockingstation nach Anspruch 12, wobei das erste Gehäuse (111) einen Gehäusekörper (1114) und eine Endplatte (1115) umfasst, die lösbar mit einer dem zweiten Gehäuse (112) abgewandten Seite des Gehäusekörpers (1114) verbunden ist, wobei eine dem Gehäusekörper (1114) zugewandte Seite der Endplatte (1115) mit einer zweiten Einführnut (1116) versehen ist, und wobei die zweite Einführnut (1116) so ausgebildet ist, dass die Leiterplatte (120) darin eingesteckt werden kann.

## Revendications

1. Station d'accueil, comportant :
un corps (100) d'accueil, muni d'une cavité (101) de logement, d'une première surface latérale (102) et d'une deuxième surface latérale (103) adjacente à la première surface latérale (102) ; la première surface latérale (102) du corps (100) d'accueil étant munie d'une ouverture (1021) placée en communication avec la cavité (101) de logement, la deuxième surface latérale (103) étant munie d'une première rainure (1031) de coulissement placée en communication avec la cavité (101) de logement, et une paroi de cavité de la cavité (101) de logement du corps (100) d'accueil étant munie d'une première rainure (1011) de limitation ; et
un connecteur mâle (200), comportant un corps (210) de raccordement logé dans la cavité (101) de logement, et une fiche mâle (220), un bouton-poussoir (230), et un bloc limiteur (240) qui sont liés au corps (210) de raccordement ; la fiche mâle (220) étant adaptée à l'ouverture (1021), le bouton-poussoir (230) étant ajusté avec la première rainure (1031) de coulissement pour amener le connecteur mâle (200) à changer entre un état logé et un état exposé ; la fiche mâle (220) passant à travers l'ouverture (1021) pour être exposée lorsque le connecteur mâle (200) est dans l'état exposé ; et la fiche mâle (220) étant logée à l'intérieur de l'ouverture (1021) et le bloc limiteur (240) étant élastiquement limité dans la première rainure (1011) de limitation, lorsque le connecteur mâle (200) est dans l'état logé ;
le bouton-poussoir (230) et le bloc limiteur (240) étant disposés d'un même côté du corps (210) de raccordement ;
**caractérisé en ce que**
le connecteur mâle (200) comporte en outre une plaque mobile (250) dotée d'une extrémité en liaison pivot avec le corps (210) de raccordement, et un organe élastique (260) élastiquement maintenu entre la plaque mobile (250) et le corps (210) de raccordement ; et le bouton-poussoir (230) et le bloc limiteur (240) étant disposés d'un côté de la plaque mobile (250) orienté à l'opposé du corps (210) de raccordement.

2. Station d'accueil selon la revendication 1, la paroi de cavité de la cavité (101) de logement du corps (100) d'accueil étant en outre munie d'une deuxième rainure (1012) de limitation espacée par rapport à la première rainure (1011) de limitation, un trajet de disposition de la deuxième rainure (1012) de limitation à la première rainure (1011) de limitation étant parallèle à une direction d'extension de la première rainure (1031) de coulissement ; et lorsque le connecteur mâle (200) est dans l'état exposé, la fiche mâle (220) passant à travers l'ouverture (1021) pour être exposée et le bloc limiteur (240) étant limité dans la deuxième rainure (1012) de limitation.

3. Station d'accueil selon la revendication 1, l'organe élastique (260) étant positionné en alignement avec le bouton-poussoir (230).

4. Station d'accueil selon la revendication 3, un côté de la plaque mobile (250) orienté à l'opposé du bouton-poussoir (230) étant muni d'un premier trou (251) de logement configuré pour loger une partie de l'organe élastique (260), et un côté du corps (210) de raccordement qui fait face à la plaque mobile (250) étant muni d'un deuxième trou (211) de logement configuré pour loger une partie de l'organe élastique (260).

5. Station d'accueil selon la revendication 3, la plaque mobile (250) étant munie d'une extrémité pivotante (252) en liaison pivot avec le corps (210) de raccordement et d'une extrémité libre (253) opposée à l'extrémité pivotante (252), le bloc limiteur (240) étant disposé à l'extrémité libre (253), et le bouton-poussoir (230) étant disposé à mi-chemin du bloc limiteur (240) et de l'extrémité pivotante (252).

6. Station d'accueil selon la revendication 1, le corps (100) d'accueil comportant :
un ensemble (110) de boîtiers, comportant un premier boîtier (111) et un deuxième boîtier (112) liés l'un à l'autre de façon détachable, et le premier boîtier (111) et le deuxième boîtier (112) étant conjointement clos pour former la cavité (101) de logement, le premier boîtier (111) étant muni d'une pluralité de prises (1111) d'extension placées en communication avec la cavité (101) de logement, et le deuxième boîtier (112) étant muni de l'ouverture (1021) et de la première rainure (1031) de coulissement ;
une carte (120) à circuits, logée dans la cavité (101) de logement, et la carte (120) à circuits étant reliée à une pluralité d'interfaces (121) d'accueil adaptées une à une à la pluralité de prises (1111) d'extension, et la carte (120) à circuits étant reliée électriquement au connecteur mâle (200).

7. Station d'accueil selon la revendication 6, l'ensemble (110) de boîtiers comportant en outre une plaque séparatrice (113) en liaison détachable avec le deuxième boîtier (112), et la plaque séparatrice (113) étant disposée entre la carte (120) à circuits et le connecteur mâle (200), et la plaque séparatrice (113) étant configurée pour diviser la cavité (101) de logement en une première cavité (1013) disposée dans le premier boîtier (111) et configurée pour loger la carte (120) à circuits, et une deuxième cavité (1014) disposée dans le deuxième boîtier (112) et configurée pour loger le connecteur mâle (200).

8. Station d'accueil selon la revendication 7, le connecteur mâle (200) étant relié électriquement à la carte (120) à circuits par l'intermédiaire d'une structure (270) de raccordement électrique, la plaque séparatrice (113) étant munie d'une deuxième rainure (1131) de coulissement, une direction d'extension de la deuxième rainure (1131) de coulissement étant parallèle à une direction d'extension de la première rainure (1031) de coulissement, la deuxième rainure (1131) de coulissement étant disposée de façon à pénétrer suivant une direction de profondeur de la deuxième rainure (1131) de coulissement, et la structure (270) de raccordement électrique étant insérée dans et liée à la deuxième rainure (1131) de coulissement.

9. Station d'accueil selon la revendication 7, un côté de la plaque séparatrice (113) qui fait face au premier boîtier (111) étant muni d'une première rainure (1132) d'insertion, et la première rainure (1132) d'insertion étant configurée pour permettre à la carte (120) à circuits d'être enfichée dans celle-ci.

10. Station d'accueil selon la revendication 7, le deuxième boîtier (112) étant muni d'un premier rail (1121) de coulissement et d'un deuxième rail (1122) de coulissement opposés l'un à l'autre, le premier rail (1121) de coulissement et le deuxième rail (1122) de coulissement étant disposés à l'écart d'une partie d'extrémité de la première surface latérale (102) et en communication avec l'extérieur, et la plaque séparatrice (113) étant susceptible de coulisser entre le premier rail (1121) de coulissement et le deuxième rail (1122) de coulissement.

11. Station d'accueil selon la revendication 6, un boîtier parmi le premier boîtier (111) et le deuxième boîtier (112) étant muni de manière convexe d'une structure (1123) d'interaction et l'autre boîtier parmi le premier boîtier (111) et le deuxième boîtier (112) étant muni de manière concave d'une rainure (1112) d'interaction configurée pour s'adapter avec la structure (1123) d'interaction.

12. Station d'accueil selon la revendication 6, un côté du premier boîtier (111) étant muni de la pluralité de prises (1111) d'extension, un côté intérieur de l'autre côté du premier boîtier (111) étant muni d'un troisième rail (1113) de coulissement, le troisième rail (1113) de coulissement étant disposé de façon adjacente à une partie d'extrémité du deuxième boîtier (112) et en communication avec l'extérieur, et la carte (120) à circuits étant susceptible de coulisser sur le troisième rail (1113) de coulissement.

13. Station d'accueil selon la revendication 12, le premier boîtier (111) comportant un corps (1114) de boîtier et une plaque (1115) d'extrémité liée de façon détachable à un côté du corps (1114) de boîtier situé à l'écart du deuxième boîtier (112), un côté de la plaque (1115) d'extrémité qui fait face au corps (1114) de boîtier étant muni d'une deuxième rainure (1116) d'insertion, et la deuxième rainure (1116) d'insertion étant configurée pour permettre à la carte (120) à circuits d'être enfichée dans celle-ci.
